# EUROPEAN PATENT APPLICATION

(11) **EP 0 798 478 A2**
(43) Date of publication of application: **01.10.1997**
(21) Application number: 97302048.0
(22) Date of filing: 25.03.1997
(51) Int. Cl.: F16C 29/02

(54) **Hydrostatic bearing**

(30) Priority: 27.03.1996 US 622843
(71) Applicant: AESOP INC., Concord, New Hampshire 03301 (US)
(72) Inventor: Slocum, Alexander H., Bow, New Hampshire (US); Kane, Nathan R., Austin, Texas 78746 (US)
(74) Representative: Allsop, John Rowland

(57) **Abstract**

A modular hydrostatic bearing for use in precision machine tools and the like, where a load is supported by bolting it to modular bearing carriages which ride on parallel bearing rails, where the carriages are kept from making physical contact with the bearing rails by hydrostatic bearing pockets formed in the carriages, and where the bearing rail has two sides and two or more surfaces per side that form load carrying surfaces that the hydrostatic bearing pockets run against. and where the bearing rail load carrying surfaces have precision smooth continuous curves between them. such that the carriage can be formed with a mating surface containing the hydrostatic bearing pockets and also have smooth continuous surfaces between the hydrostatic bearing pockets, such that the carriage can be fined over the rail with clearance suitable for hydrostatic bearing operation. but greatly reduced leakage flow because there is no direct leakage flow to the atmosphere from between sets of adjacent load carrying hydrostatic bearing pockets; and where the rail may be formed by precision profile grinding, and the carriage being formed, for example, by broaching, replication, wire EDM, or split to allow it to be profile ground.

## Description

The present invention relates to modular hydrostatic or aerostatic bearings for use in precision machine tools and the like, where it is important to make the modular bearings bolt-for-bolt compatible with similar modular rolling element bearings for linear motion.

### BACKGROUND

Hydrostatic bearings are well known in the machine tool industry to provide the most accurate motion, and the longest life. With the need for ever greater accuracies to make higher quality parts, and the need for higher production rates which increase total accumulated travel on the machine bearings, an alternative is needed to the popular modular rolling element linear bearings that are commonly sold in the machine tool industry.

One feature of rolling element linear motion bearings is their relatively small profile. Another feature is their ease of use: A machine tool builder need only take the bearing out of the box and bolt it down. In today's world of modular order-what-you-want and it will be easily customized, it would be of great value to have a modular hydrostatic bearing that may be made bolt-for-bolt compatible with existing modular rolling element linear bearings.

There are a great many hydrostatic bearing designs currently available. All require a means to restrict the flow (compensation) as described, for ex ample, by A. H. Slocum in Precision Machine Design, Prentice Hall, Englewood Cliffs. NJ, 1992. Orifice compensated hydrostatic bearings, for example, are well-known in the art. More recently self-compensated hydrostatic bearings, such as described in U.S. Patent 5,104,237 of common assignee with the present invention, have become available, making manufacture and implementation of the bearings far more economical and effective.

Applying hydrostatic bearing technology to the basic profile rail shape used for existing modular rolling element bearings, however, requires high pressures, in the range of 30 to 100 bar, in order to obtain reasonable load capacity and stiffness characteristics in view of the small surface areas available. The fact that the perimeter of each of the four hydrostatic bearing pockets required to support the bearing carriage is typically open to a drain to the atmosphere, furthermore, causes the flow rate to be very high. Reducing flow rate is highly desirable because it results in more efficient, lower cost filtration, and reduces drainage system cost. Furthermore, reducing flow rate reduces the pump power proportionally, which has major benefits including a lower cost and more compact pumping system, and less heat generation in the bearing fluid. reducing thermal errors.

To provide a durable means for preventing drainage from bearing pockets to the atmosphere, it is highly desirable to provide smooth contours. using large rounds between adjacent load bearing surfaces. In one prior art design with a profile rail. U.S. Patent 4,978,233, all of the profile rails disclosed are shown with sharp edges. Sharp edges and/or very small rounds are highly undesirable for sealing flow between adjacent bearing pockets because the fine edges are highly susceptible to damage and erosion. and also to manufacturing errors due to wear of fine edges on the forming tool. It should be noted, also, that in order to achieve hydrostatic stiffness. for each load bearing surface there must be at least one separate fluid pocket with its own individual pressure compensation means. In one embodiment of the prior art design 4,978,233, separate load bearing pockets are not even provided, hence individual compensation is impossible, and in the other embodiment presented, the compensation means presented using throttling holes is highly impractical because there is no means for tuning the resistances of the throttling holes once the disclosed bearing is assembled, and any such throttling holes shown are susceptible to deformation when the disclosed bearing insert is formed prior to assembly.

Given these drawbacks, prior art hydrostatic modular linear motion bearings have not performed satisfactorily and thus have been deemed economically unfeasible. The present invention, however, provides a durable means to cut the leakage flow in half, and to enable easy manufacture of the bearing rail and mating carriage, such that orifice compensated, self-compensating, or other types of hydrostatic bearings can now easily be made modular and compatible with modular rolling element bearings admirably useful in linear motion bearing rail applications and the like.

### OBJECTS OF THE INVENTION

An object of the present invention, accordingly, is to provide a new and improved design for a modular linear motion bearing rail that can support a hydrostatic bearing carriage with minimal leakage while still being bolt-for-bolt compatible with modular rolling element linear motion bearings.

A further object is to provide a new and improved design for a modular linear motion bearing carriage supported with respect to its guiding bearing rail by hydrostatic bearings where the carriage bearing surface profile is smooth and continuous between adjacent bearing pockets to durably minimize leakage and hence minimize required pumping power.

A further objective is to provide a novel design for a modular linear motion bearing carriage which can be precision ground in two matable halves, such that they can be assembled about the mating bearing rail, with a continuous bearing gap maintained between adjacent bearing pockets so as to eliminate external leakage from the region between the bearing pockets.

Other and further objects will be explained hereinafter and are more fully delineated in the appended claims.

### SUMMARY

In summary, the present invention relates to modular hydrostatic bearings for use in precision machine tools and the like, where a load is supported by bolting it to modular bearing carriages which ride on long bearing rails, where the carriages are kept from making physical contact with the bearing rails by hydrostatic bearing pockets formed in the carriages, and where the bearing rail has two sides and two or more surfaces per side that form load carrying surfaces that the hydrostatic bearing pockets run against, and where the bearing rail load carrying surfaces have precision smooth continuous curves between them, such that the carriage can be formed with a mating surface containing the hydrostatic bearing pockets and also have smooth continuous surfaces between the hydrostatic bearing pockets, such that the carriage can be fitted over the rail with clearance suitable for hydrostatic bearing operation, but greatly reduced leakage flow because there is no direct leakage flow to the atmosphere from between sets of adjacent load carrying hydrostatic bearing pockets; and where the rail may be formed by precision profile grinding, and the carriage formed, for example, by broaching, replication, wire EDM, or split to allow it to be profile ground.

In this invention, advantage is taken of modem manufacturing techniques to produce a linear motion bearing rail with an accurate profile all along the surfaces which are load bearing and the curved portions between the load bearing portions such that an accurate form fitting carriage can fir over the rail with a controlled clearance all along the accurate profile, thereby limiting the number of leakage paths from the hydrostatic support pockets to the atmosphere, because adjacent hydrostatic pockets will now no longer be separated by drains formed by previously required grinding relief grooves between load bearing surfaces on the rail and in the carriage.

Preferred and best mode embodiments and techniques are hereinafter described.

### DRAWINGS

The present invention will now be described with reference to the accompanying drawing in which:
Fig. I is an isometric view of the modular linear motion hydrostatic bearing with the carriage form fitting to the profile rail;
Fig. 2 is an end view of a back-to-back load carrying design for the modular hydrostatic bearing system, where the rail base is form-compatible with existing modular rails for rolling elements;
Fig. 3 is an end view of a back-to-back load carrying design for the modular hydrostatic bearing system, where the rail base has a step to make it compatible with existing modular rails for rolling elements, while allowing for a larger load-carrying region;
Fig. 4 is an end view of a back-to-back load carrying design for the modular hydrostatic bearing system, similar to that in Fig. 2, but the carriage is split into two precision-ground halves that make profile grinding of the carriage easier;
Fig. 5 is an end view of one side of the profile ground carriage shown in Fig. 4;
Fig. 6 is an end view of the hydrostatic bearing pads for a self-compensated modular hydrostatic bearing with carriage form-fit to the profile rail for reduced flow;
Figs. 7 and 8 are unwrapped face views of the bearing surfaces on both sides of the self-compensated modular hydrostatic bearing shown in Fig. 6;
Figs. 9 and 10 are unwrapped face views of the bearing surfaces on both sides of the self-compensated modular hydrostatic bearing shown in Fig. 6 with partial central drain grooves included;
Fig. 11 is an end view of the hydrostatic bearing pads for an externally compensated modular hydrostatic bearing with carriage form-fit to the profile rail for reduced flow;
Figs. 12 and 13 are unwrapped face views of the bearing surfaces on both sides of the externally compensated modular hydrostatic bearing shown in Fig. 11;
Figs. 14 and 15 are unwrapped face views of the bearing surfaces on both sides of the externally compensated modular hydrostatic bearing shown in Fig. 11 with partial central drain grooves included;
Fig. 16 is an end view of a version of the invention where the load bearing surfaces are arranged in a face-to-face load bearing configuration;
Figs. 17 and 18 are end views of modified versions of the invention where the load-bearing surfaces are tiered to give a greater effective area; and
Fig. 19 is a top view of two carriages on a rail which has a taper and a neck to allow dirt particles trapped in any bearing pockets to be flushed away;

### PREFERRED EMBODIMENT(S) OF THE INVENTION

This invention, as above explained. achieves its objectives by establishing the relative position of a carriage to a bearing rail with the use of hydrostatic (or aerostatic, as will be used interchangeably here since both rely on externally pressurized flows) bearings. The key is to minimize flow which thus also minimizes the pumping power required by the fluid source.

This can be accomplished. in accordance with the present invention. by recognizing that when adjacent pairs of hydrostatic bearing pockets are preloaded against each other, yet separated by a suitable leakage path distance, one pocket will act as a seal against leakage flow out of its neighbor's pocket, and the majority of the fluid flow out of a hydrostatic bearing pocket will thus occur along one edge only. In this manner, mainly one edge gap is modulated by load which thus acts to balance the hydrostatic pressure by the action of a fluid circuit similar to that of a Wheatstone Bridge, as is known to those skilled in the art, and discussed in detail in the above referenced textbook by the inventor.

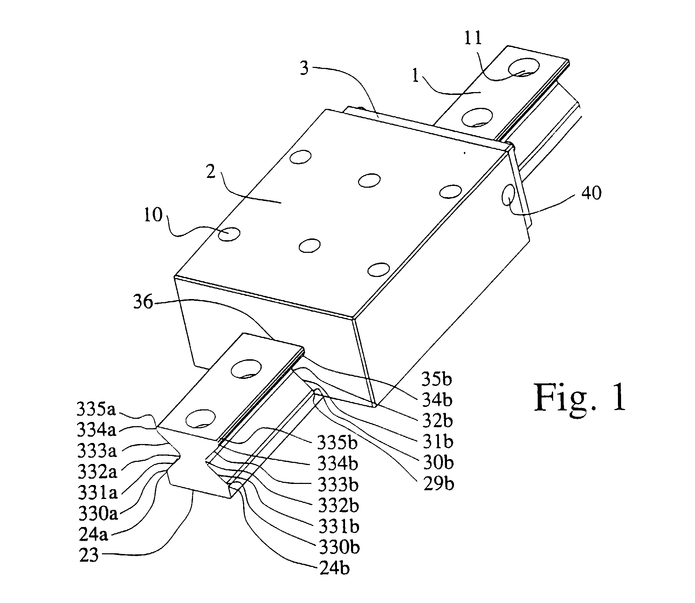

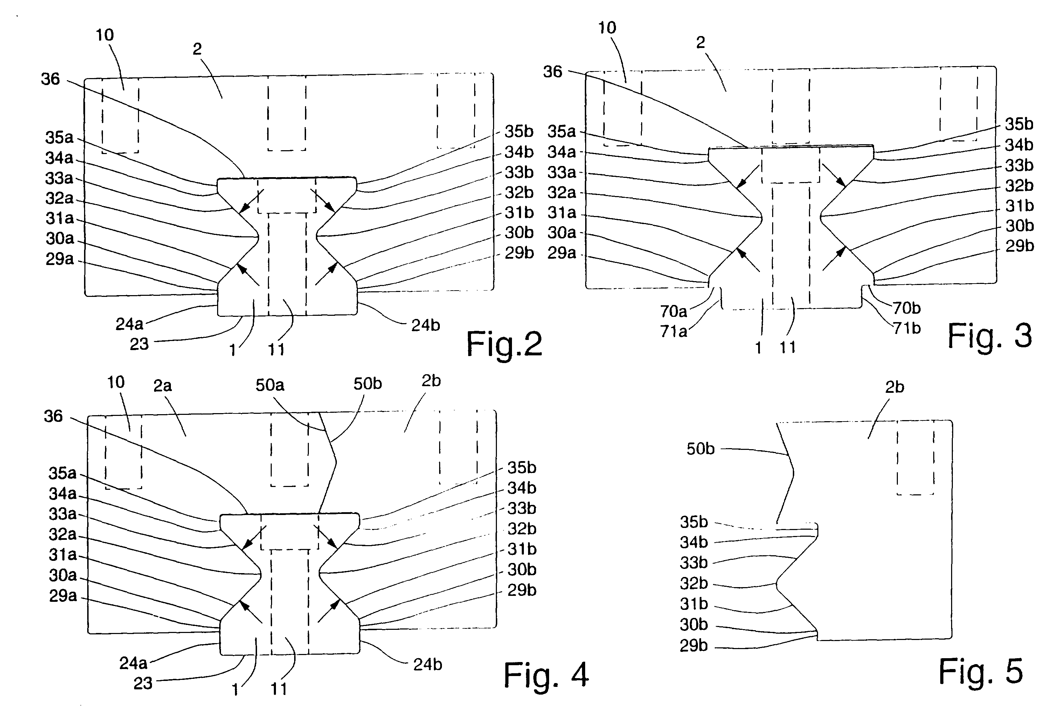

Fig. 1 illustrates a back-to-back embodiment of the present invention in an isometric view, and Fig. 2 by end view, with arrows showing the direction of hydrostatic loading on the carriage. The modular bearing rail 1, which for this particular embodiment has four load bearing surfaces arranged in a back-to-back configuration (as can be recognized by those familiar with the art), has counter-bored bolt holes such as 11 that would allow it to be bolted to a machine tool bed. The rail has a precision bottom surface 23 and precision side edges 24a and 24b.. The key differentiating feature between this raft of the present invention and other bearing rails used for hydrostatic bearings is the highly accurate contour that forms a precision curvilinear surface comprised of the regions on the rail 330b, 331b, 332b, 333b, 334b, and 335b. These regions are precisely and accurately mirrored features of surfaces 330a, 331a. 332a. 333a. 334a, and 335a which are on the opposite side of the rail. A high degree of accuracy can be obtained by profile-grinding the surfaces. Note that the region 36 between the top of the rail and the inside surface of the carriage should have sufficient clearance to act as a drain. The carriage 2 which rides on the rail I has threaded holes, such as 10, which allow a machine tool structure to be bolted to it. The carriage may also have a manifold 3 by which hydrostatic fluid is distributed as will be discussed later, or a single fluid pressure entry port 40 may be used with internal distribution.

In Fig. 1 showing an isometric view and Figure 2 showing an end view, the carriage 2 includes bearing surfaces 35a, 34a, 33a. 32a, 31a. 30a. and 29a displaced from the corresponding rail bearing surfaces 335a, 334a, 333a, 332a, 331a. 330a, and 24a by an amount nominally used for hydrostatic bearings, and likewise the carriage 2 includes bearing surfaces 35b, 34b, 33b, 32b, 31b, 30b, and 29b displaced from the corresponding rail bearing surfaces 335b, 334b, 333b, 332b, 331b, 330b and 24b by an amount nominally used for hydrostatic bearings, which may be on the order of 5 micrometers for air bearings and 50 micrometers for viscous oil bearings.

In order to consider the design of the system in greater detail, Fig. 3, with arrows indicating the direction of hydrostatic loading, shows the end view of a system like that of Fig. 2, where the rail 1 is formed with a base 23 that is compatible with existing modular rolling element bearing rails, as by the use of counter bored bolt holes 11 with which to attach the rail to a machine base. To give a greater hydrostatic bearing area for increased load capacity, however, there is provided an overhanging step, defined by vertical surfaces 71a and 71b and horizontal surfaces 70a and 70b that effectively increases base width of the bearing. This allows the carriage 2 to have greater bearing areas 35a, 34a, 33a, 32a, 31a, 30a, 29a, 35b, 34b, 33b, 32b, 31b, 30b, and 29b.

The carriage 2 may be formed by broaching or wire electrical discharge machining a one-piece cast or formed or 3D printed carriage. In some cases, the desired precision could be achieved by milling or grinding the internal bearing surfaces on a one-piece cast or formed or 3D printed carriage. However, an alternative is to form the carriage as shown in Fig. 4, in which the carriage is shown formed in two bonded pieces 2a and 2b, the two pieces being profile ground separately before bonding and later bonded together using a precision boding means, such as low temperature brazing, bolting, or bolting in conjunction with use of a high strength epoxy. Fig. 5 shows one of the pieces 2b. The carriage in Fig. 4 comprising the bonded parts 2a and 2b has the same hydrostatic load carrying surfaces 35a, 34a, 33a. 32a. 31a, 30a, and 29a preloaded against hydrostatic bearing surfaces 35b, 34b, 33b, 32b. 31b, 30b, and 29b. The rail 1 still has mounting bolt holes, such as 11, bottom reference edge 23. and side edges 24a and 24b. The carriage pieces 2a and 2b still have threaded holes for mounting, such as 10. The carriage piece 2a has a precision convex mating surface 50a and the mating carriage piece 2b has a precision concave mating surface 50b. As shown in Fig. 5, the entire side surface of the bearing carriage piece 2b (and its mate 2a), which includes a precision mating surface and precision bearing surfaces, can be formed by a single profiled grinding wheel. Thus the carriage pieces can be formed with great precision for a very low price. This two piece embodiment also leaves the hydrostatic bearing surfaces easily accessible, prior to bonding, to forming by various machining methods or to surface coating by various surface coating methods well known to those skilled in the art of precision manufacturing.

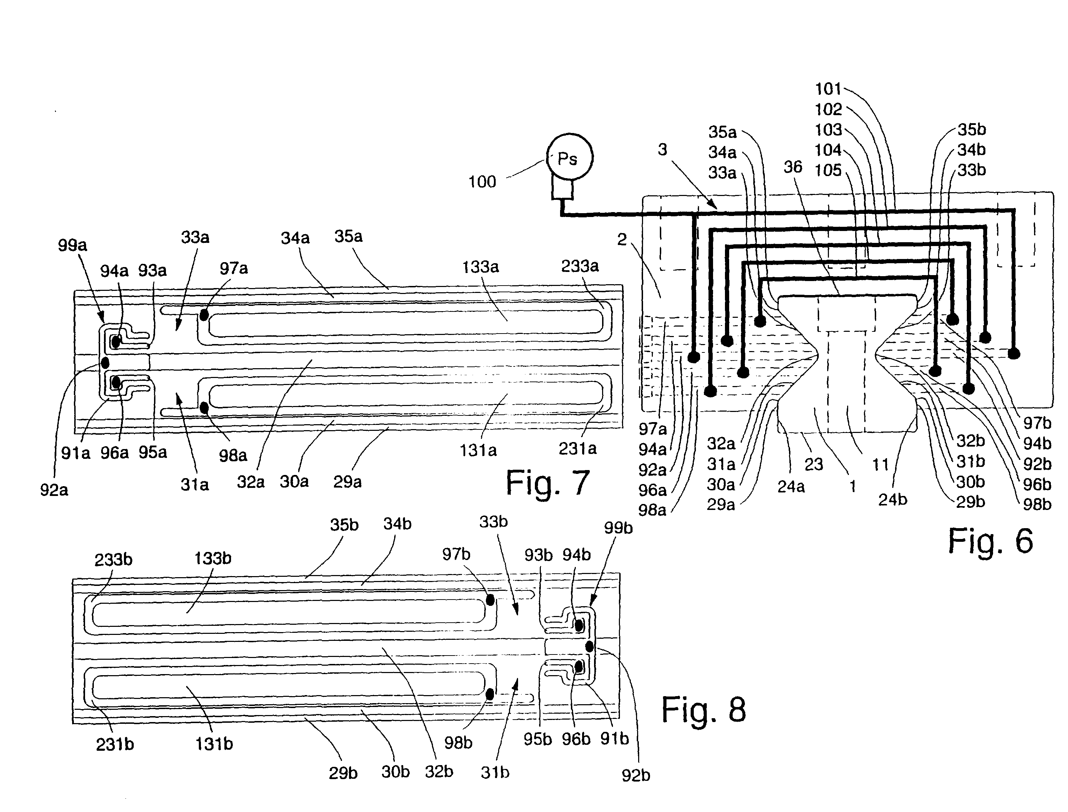

To illustrate the hydrostatic function of the system of the present invention, first consider a self-compensating hydrostatic bearing system as shown in Fig. 6, Fig. 7, and Fig. 8. In Fig. 6 the rail 1 has a form-fitting carriage 2 with an end-mounted manifold 3 which distributes fluid from pump 100 via supply lines 101 to the self-compensating units 99a and 99b. The carriage 2 has hydrostatic bearing surfaces 35a, 34a, 33a, 32a, 31a, 30a, 29a, 35b, 34b, 33b, 32b, 31b, 30b, and 29b. Fig. 7 shows an unwrapped face view of the contoured hydrostatic bearing surfaces 35a, 34a, 33a, 32a, 31a, 30a, and 29a on one side of carriage 2. Fig. 8 shows an unwrapped face view of the contoured hydrostatic bearing surfaces 35b, 34b. 33b, 32b, 31b, 30b, and 29b on the other side of carriage 2. The pressurized fluid from the pump 100 is delivered via supply lines 101 through supply holes 92a, 92b to the pressure supply grooves 91a. 91b. The pressure supply grooves 91a, 91b, the collector grooves 93a, 95a, 93b, 95b, and the bearing pocket grooves 231a, 233a, 231b, 233b typically have a depth equal to at least 10 times the nominal bearing gap, to minimize pressure drops across them. The first leakage flow saving feature of the present invention is provided because the carriage surfaces 32a and 32b are close-fitting to the rail, so the pressure supply grooves present on one side of the carriage can share a common center. If a conventional bearing rail and carriage were fitted with self-compensating hydrostatics, then the regions 32a and 32b on the carriage would be grinding reliefs and thus serve as fluid drains, so the leakage flow from the pressure supply grooves would increase by about 30%. Note that there are other designs for self-compensating bearings as is known by those skilled in the art, that could be used here, and they also can benefit from reduced leakage flows due to the close fitting regions 32a and 32b.

Fluid from the pressure supply grooves 91a and 91b flows in a restricted manner, controlled by the gap between the carriage and the rail, as is the nature of self-compensation, across the bearing carriage surface to collector grooves 93a and 95a on one side of the carriage in Fig. 7, and to collector grooves 93b and 95b on the other side of the carriage in Fig. 8. The fluid then enters collector holes 94a and 96a, respectively, and collector holes 94b and 96b, respectively. The fluid is then channeled to opposed bearing pocket holes 98b and 97b by fluid passages 103 and 104, respectively, and to opposed bearing pocket holes 98a and 97a by fluid passages 102 and 105, respectively. Fluid then enters the bearing pocket grooves 231b, 233b, 23 la, and 233a. It should be observed that inside the outer perimeter of the bearing pocket grooves 23 la, 233a, 231b, and 233b there are central damping lands 131a, 133a, 131b, 133b, respectively, which are precision surfaces coplanar with the neighboring bearing lands on surfaces 31a. 33a, 31b, 33b, respectively, to provide additional squeeze film damping to the bearing carriage.

Further to illustrate the reduction in leakage flows in accordance with the present invention, consider side "a" of the carriage. The bearing pocket grooves 231a and 233a will have dominant leakage paths to the atmosphere via lands formed primarily by perimeter surfaces 29a, 30a, 34a, and 35a. The bearing pocket grooves 231a and 233a will not experience substantial "cross-talk" between them because the central surface 32a is sufficiently wide to act as a region of high resistance relative to the resistance of the perimeter surfaces 29a, 30a, 34a, and 35a. Compared to prior art designs, for which the central region 32a would be a grinding relief, the leakage flow of the present invention from the bearing pocket grooves to the atmosphere is reduced by about 40%.

The two flow reducing features of the present invention together reduce the total bearing flow rate by about 60%-70%, when compared to prior art designs, which have grinding relief drains in the central regions 32a and 32b. Since pump power is directly proportional to the pump flow rate, when operating at a given supply pressure, reducing the flow rate by 60-70% also reduces the pump power requirement by the same amount. The reduction in pump power has several major benefits for machine tool applications, including a lower cost, more compact pumping system, smaller plumbing, a lower cost and more effective filtration system, and less heat generation in the bearing fluid, which reduces thermal errors. On the other hand, load capacity and stiffness of the present invention are only marginally affected, as can be determined by standard resistance circuit analysis known to those skilled in the art.

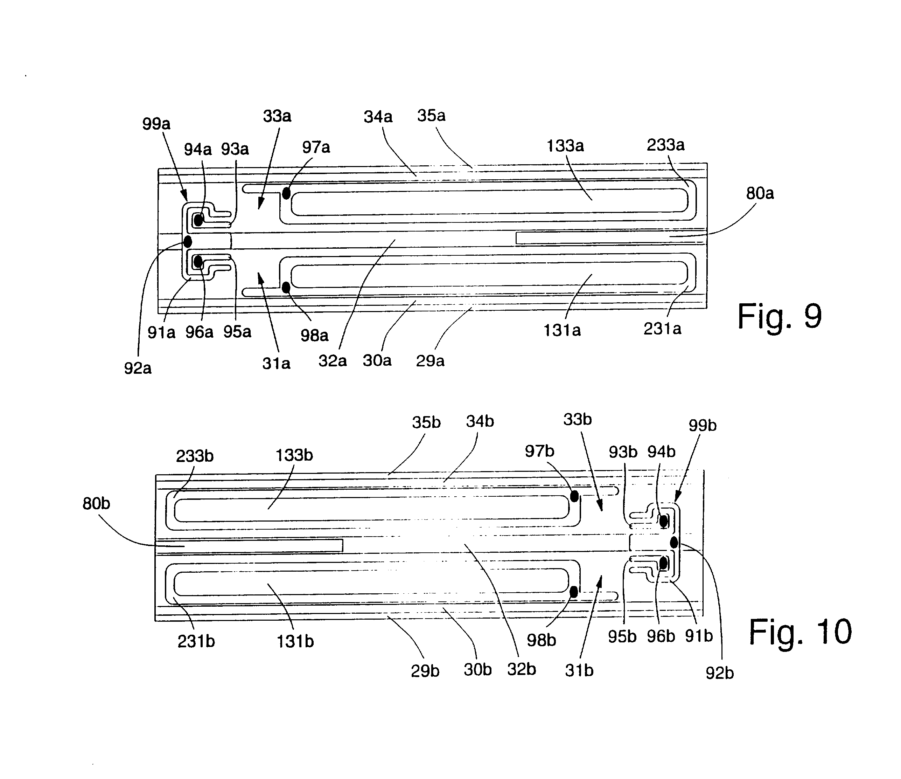

For some self-compensating embodiments, it may be advantageous to have partial central drain grooves present over some of the length, but not all of the length, of form fitting central surfaces 32a and 32b. Fig. 9 and Fig. 10 show unwrapped face views of the contoured hydrostatic beating surfaces of the carriage 2, with partial drain grooves 80a and 80b included, which are present over some of the length of surfaces 32a and 32b, specifically between the some of the region between bearing pocket grooves 231a, 233a, and 231b, 233b. Unlike prior art designs, for which central drain grooves extend the entire length of the carriage, the length of the partial central drain groove of the present invention is a design variable, which may be used for optimization of a desired bearing characteristic, such as load capacity or pump power. Furthermore, unlike prior art designs, the partial central drain groove does not extend all the way to the supply grooves, thus allowing the flow saving central supply groove design of the present invention to be realized. One reason for having partial central drainage is that for some designs the rail may elastically deflect significantly, causing the gaps at the perimeter regions 34a. 35a. 34b, and 35b to open up significantly, thereby reducing the pressure compensating effect. The adverse effects of rail deflection can be mitigated somewhat by means of partial central drain grooves 80a and 80b, by allowing pressure compensation to occur along the centrally facing edges of the bearing pocket grooves, where less rail deflection occurs.

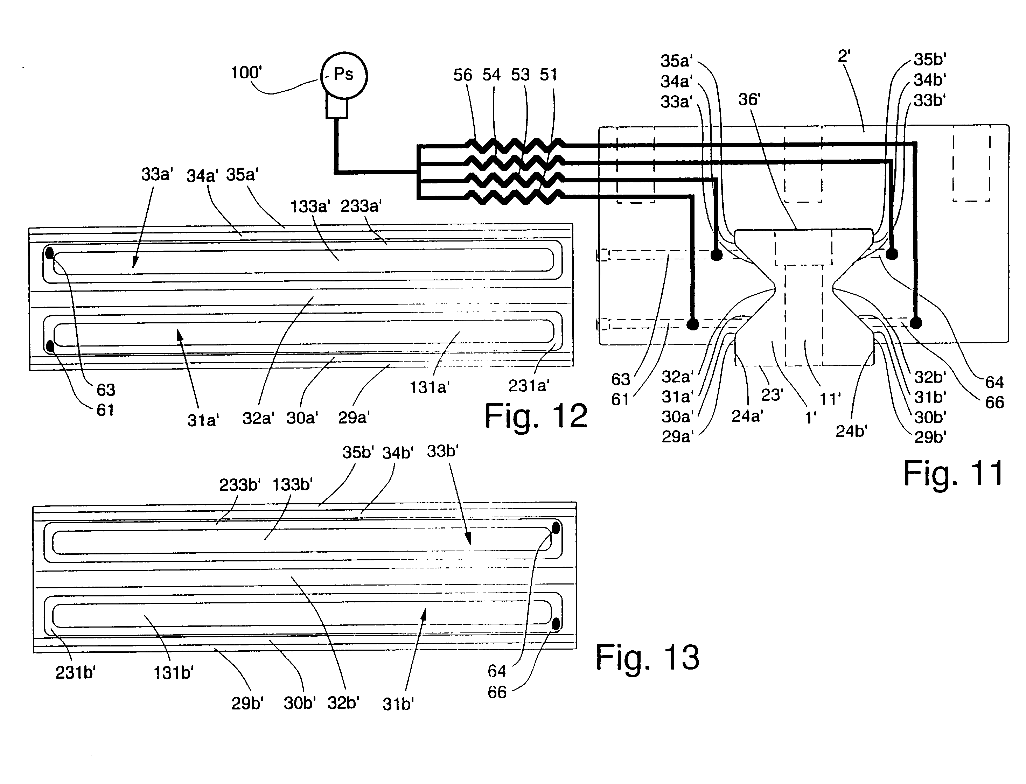

The present invention is not, however, limited to self-compensated hydrostatic bearings. In Fig. 11 is shown an end view of a bearing having fixed compensation, incorporating rail 1' with a form-fitting carriage 2' of the present invention. Fig. 12 shows an unwrapped face view of the contoured hydrostatic bearing surfaces 35a', 34a', 33a', 32a', 31a', 30a', and 29a' on one side of the carriage 2'. Fig. 13 shows an unwrapped face view of the contoured hydrostatic bearing surfaces 35b', 34b', 33b', 32b', 31b', 30b', and 29b' on the other side of carriage 2'. As shown in Fig. 11, Fig. 12, and Fig. 13, the pump 100' supplies fluid which passes through fluid resistances 51, 53, 54, and 56, then through bearing pocket holes 61, 63, 64, and 66, respectively, to bearing pocket grooves 231a', 233a', 233b', and 231b', respectively, located on the carriage 2' that rides on the rail 1'. The bearing pocket grooves typically have a depth equal to at least 10 times the nominal bearing gap, to minimize pressure drops across them. The actual location of the flow resistances can of course be optimized according to the type of restriction device used. It should be observed that inside the outer perimeter of the bearing pocket grooves 231a', 233a', 231b', and 233b' there are central damping lands 131a'. 133a', 131b', 133b', respectively, which are precision surfaces coplanar with the neighboring bearing lands on surfaces 31a', 33a', 31b', 33b', respectively, to provide additional squeeze film damping to the bearing carriage.

In a manner similar to the self-compensating system described previously, considering for example side "a", the bearing pocket grooves 231a' and 233a' will not experience substantial "cross-talk" between them because the central surface 32a' is sufficiently wide to act as a region of high resistance relative to the resistance of the perimeter surfaces 29a', 30a', 34a'. and 35a'. The present invention thus provides for substantially reduced flow and pump power requirements while at the same time only marginally effecting the load capacity and stiffness of the bearing, as can be determined by standard resistance circuit analysis known to those skilled in the art. The present invention also provides for a means to economically to manufacture modular hydrostatic bearings with small clearances required for efficient operation.

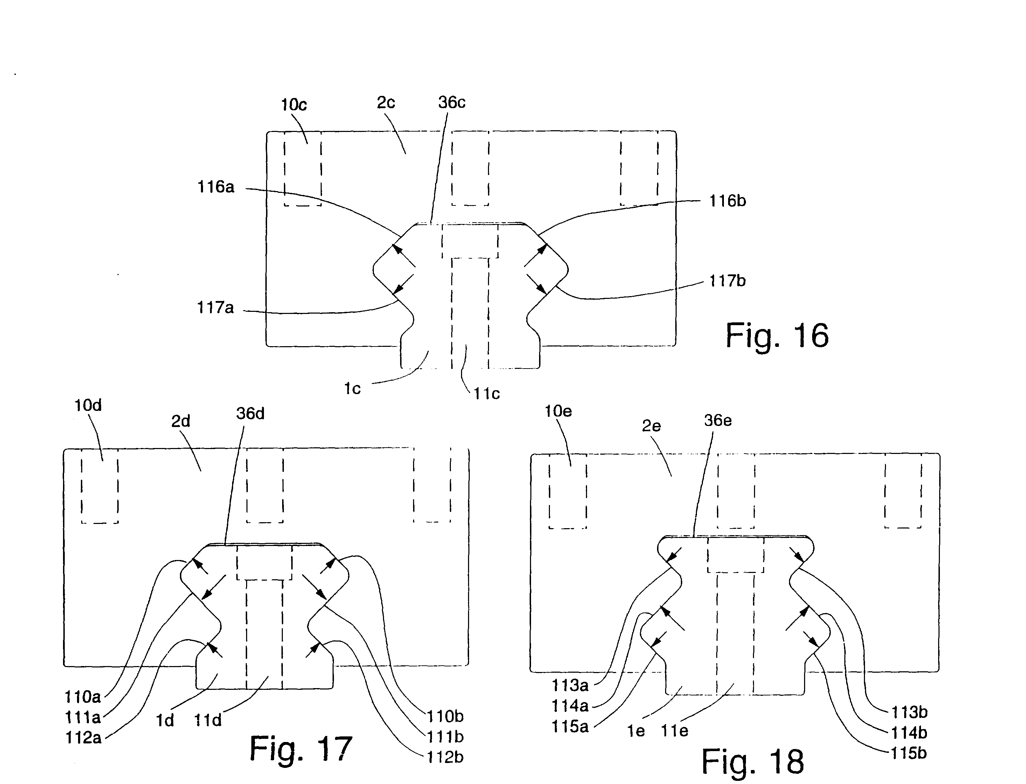

For some fixed compensating embodiments, it may be advantageous to have partial central drain grooves present over some of the length, but not all of the length, of form fitting central surfaces 32a' and 32b'. Fig. 14 and Fig. 15 show unwrapped face views of the contoured hydrostatic bearing surfaces of the carriage 2', with partial drain grooves 80a' and 80b' included, which are present over some of the length of surfaces 32a' and 32b'. Unlike prior art designs, for which central drain grooves extend the entire length of the carriage, the length of the partial central drain groove of the present invention is a design variable, which may be used for optimization of a desired bearing characteristic, such as load capacity or pump power. As with some self-compensating systems, one reason for having partial central drainage is that for some designs the rail may elastically deflect significantly, causing the gaps at the perimeter regions 34a', 35a', 34b', and 35b' to open up significantly, thereby reducing the pressure compensating effect. The adverse effects of rail deflection can be mitigated somewhat by means of partial central drain grooves 80a' and 80b', by allowing pressure compensation to occur along the centrally facing edges of the bearing pocket grooves, where less rail deflection occurs.

In addition to configuring the bearing surfaces in a back-to-back arrangement, it is possible to configure the bearing surfaces in a face-to-face arrangement. Fig. 16 shows a face-to-face embodiment of the present invention (as would be recognized by those familiar with the art), with arrows showing the direction of hydrostatic loading acting on the carriage, where rail 1c again includes mounting bolt holes such as 11c, and carriage 2c rides on the rail 1c in a close form-fitting manner to minimize leakage flows, as described in detail in previous paragraphs. The carriage 2c again includes threaded holes such as 10c for mounting. The hydrostatic loads on bearing surfaces 116a and 116b resist downward forces acting on the carriage 2c, and the hydrostatic loads on bearing surfaces 117a and 117b resist upward forces acting on the carriage 2c.

There may be some cases where a multi-tiered embodiment of the present invention is desirable, in order to achieve greater load carrying area and hence greater bearing load capacity, without increasing the overall envelope of the bearing size. A multi-tiered embodiment of the present invention, which includes six load bearing planar surfaces, is shown in Fig. 17, with arrows showing the direction of hydrostatic loading acting on the carriage, The embodiment includes rail 1d with bolt holes for attachment 11d and form-fitting carriage 2d to reduce flow, with threaded holes 10d for attachment. For the Fig. 17 embodiment, note that a force pushing down on the carriage is counteracted by hydrostatic loads acting on the four surfaces 110a, 112a and 110b, 112b, and a force pulling up on the carriage is counteracted by hydrostatic loads acting on the two surfaces 111a and 111b. Fig. 18 shows another multi-tiered embodiment which includes rail le with bolt holes for attachment 1 le and form fitting carriage 2e for reducing flow, with threaded holes 10e for attachment. For the Fig. 18 embodiment, note that a force pushing down on the carriage is counteracted by hydrostatic loads acting on the two surfaces 114a and 114b, and a force pulling up on the carriage is counteracted by hydrostatic loads acting on the four surfaces 113a. 115a and 113b, 115b.

In all cases, the "a" side surfaces resist lateral loads in one direction, and the "b" side forces resist lateral loads in the other direction. The lines with arrows pointing to the carriage surfaces indicate the direction of hydrostatic loading acting on the carriage.

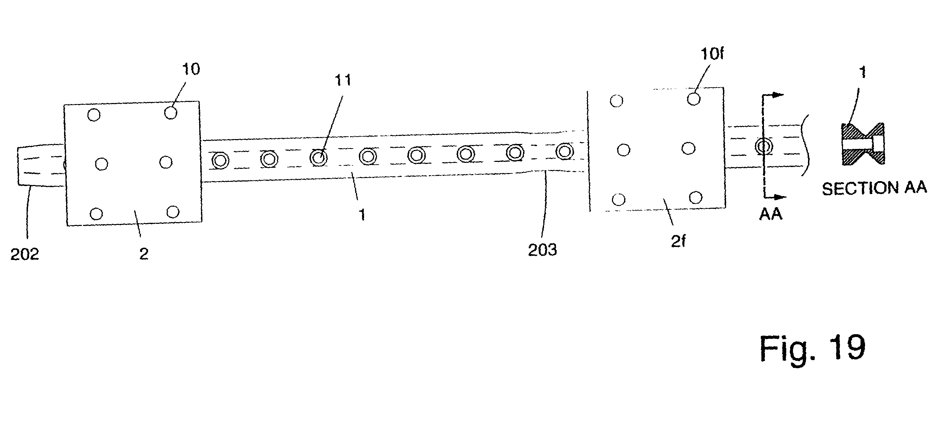

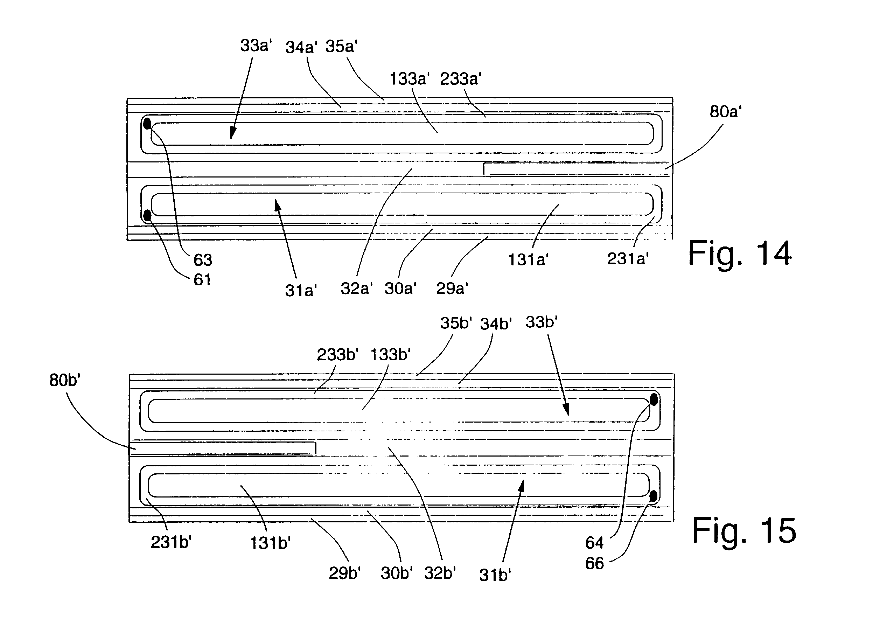

For cases where fine particle filtration is difficult, a cleaning means is provided for flushing away dirt particles which may accumulate in a bearing pocket, without causing a total loss of hydrostatic load carrying capacity. The cleaning means is achieved by grinding a local taper or neck in the rail, with a maximum depth roughly equal to the bearing gap. so that when a carriage is moved over the taper or neck. the bearing gap is roughly doubled over a portion of the carriage's length, allowing particles trapped in pockets which overlap the taper or neck to escape. Because grinding a slight taper or neck in a rail is a simple and low cost operation when using profile grinding techniques, the presently described cleaning means is well suited for use with the present form fitting carriage invention. To implement this cleaning means, the hydrostatic machine tool axis would be designed with some extra travel at one or both ends of its travel, where cleaning would occur. Fig. 19 shows an embodiment of the cleaning means, showing rail 1 with mounting holes such as 11, with taper 202 on its end, and neck 203 on its middle section, the latter two features being drawn greatly exaggerated for illustrative purposes. When carriage 2 is moved over taper 202, dirt trapped in pockets which overlap the taper 202 can be flushed away. Likewise, when carriage 2f is moved over the neck 203, dirt trapped in pockets which overlap the neck 203 can be flushed away. Using this method, self-compensating carriages would be oriented so the supply grooves face the taper or the neck to be used, so the supply grooves get flushed out first. For some applications, the carriages on the machine table will be separated enough so that cleaning can occur on all carriages at only one end of the table's travel, by using tapers at one end of the rails and necks in the middle. For the remaining applications, necks could not be used due to undesired overlapping, and hence tapers would have to be used at both rail ends, requiring the table to travel to either end of its travel to clean all of the trucks.

Further modifications of the invention will also occur to persons skilled in the art, and all such are deemed to fall within the spirit and scope of the invention as defined in the appended claims.

## Claims

1. A modular hydrostatic bearing for use in precision machine tools and the like, having, in combination, modular bearing carnage(s) for bolting a structure to, precision profiled bearing rails bolted to a machine bed; a fluid pressure source and fluid distribution system therefrom, keeping them from making physical contact with the bearing rails; hydrostatic (aerostatic) bearing pockets formed in the carriage(s), said bearing rail having two sides and two or more surfaces per side that form load-carrying surfaces that the hydrostatic bearing pockets run against, and which have precision smooth continuous curves between them, such that the carriage can be formed with a mating surface containing the hydrostatic bearing pockets and also have smooth continuous surfaces between the hydrostatic beating pockets, enabling the carriage to be fitted over the rail with clearance suitable for hydrostatic bearing operation, but greatly reduced leakage flow because there is limited direct leakage flow to the atmosphere from between sets of adjacent load carrying hydrostatic bearing pockets. The rail may be formed by precision profile grinding, and the carriage being formed for example by broaching, replication, wire electrical discharge machining, or split to allow it to be profile ground.

2. A modular linear bearing rail with hydrostatic (aerostatic) bearing surfaces that are connected by accurately formed profiled contours to allow a mating hydrostatic (aerostatic) bearing supported carriage to mate with the rail such that there is no direct leakage path from between adjacent bearing pockets to the atmosphere.

3. A modular linear bearing as claimed in claim 2, wherein the hydrostatic (aerostatic) bearing carriage bearing surfaces that mate with said rail are formed by broaching the precision profile bearing surface and the precision contours connecting the bearing surface regions.

4. A modular linear bearing as claimed in claim 2, wherein the hydrostatic (aerostatic) bearing carriage bearing surfaces that mate with said rail are formed by wire electrical discharge machining the precision profile bearing surface and the precision contours connecting the bearing surface regions.

5. A modular linear bearing as claimed in claim 2, wherein the hydrostatic (aerostatic) bearing carriage bearing surfaces that mate with said rail are formed by replicating the precision profile bearing surface and the precision contours connect the bearing surface regions.

6. A modular linear bearing as claimed in claim 2, wherein the hydrostatic (aerostatic) bearing carriage bearing surfaces that mate with said rail are formed by precision profile grinding two halves of the carriage, including the bearing surfaces, and precision connecting contours and mating contours between the two halves, to form a unit which when brought together, and held by bolts. bonding, brazing, or other connection means, forms a precision carriage that fits said bearing rail with the desired clearances required for hydrostatic operation.

7. A modular hydrostatic bearing as claimed in claim 1 wherein the hydrostatic compensation means is self-compensating.

8. A modular hydrostatic bearing as claimed in claim 1 wherein the hydrostatic compensation means is fixed compensation such as provided by an orifice or flow restrictor.

9. A modular hydrostatic bearing as claimed in claim 1 wherein the hydrostatic compensation means is diaphragm compensation.

10. A modular hydrostatic bearing as claimed in claim 1 wherein the hydrostatic compensation means is a constant flow device.

11. A modular hydrostatic bearing as claimed in claim 1 wherein the hydrostatic (aerostatic) compensation means is a porous medium.

12. A modular hydrostatic bearing as claimed in claim 1 wherein said carriage is formed by 3D solid printing so that all hydrostatic pockets and internal passages are formed by the 3D printing process, and the bearing surfaces need only be cleaned up to form precise surfaces using broaching, wire electrical discharge machining, grinding, or other similar precision manufacturing methods.

13. A modular hydrostatic bearing as claimed in claim 1, wherein the hydrostatic bearing surfaces are disposed in a number of tiered surfaces connected by accurate continuous curves, so as to provide the desired bearing area in a desired bearing rail envelope, and so as to provide the desired bearing area while increasing the rail rigidity.

14. A modular hydrostatic bearing as claimed in claim 1, wherein the bearing surfaces are arranged in either a back-to-back or face-to-face arrangement in order to optimize rail or carriage geometry to facilitate manufacture and modularity.

15. A hydrostatic bearing as claimed in claim 1 wherein the rail mounting surface is stepped to allow for a linear bearing standard rail width to mount to a machine. yet the upper rail structure can be larger to provide more bearing area.

16. A modular linear bearing rail with hydrostatic (aerostatic) bearing surfaces as claimed in claim 2 wherein dirt flushing means is provided by the presence of one of a slight taper on at least one of said rail ends and in some cases a slight neck at a predetermined location on the middle portion of the rail, thereby increasing the effective bearing gap over said taper and neck regions. thus allowing trapped dirt particles to escape pockets that pass over the taper and neck regions.
